# EUROPEAN PATENT APPLICATION

(11) **EP 4 632 888 A1**
(43) Date of publication of application: **15.10.2025**
(21) Application number: 24753531.3
(22) Date of filing: 29.01.2024
(51) Int. Cl.: H01M 50/126, H01M 50/105, H01M 50/119, H01M 50/121, H01M 10/052

(54) **POUCH FILM LAMINATE AND SECONDARY BATTERY**

(30) Priority: 06.02.2023 KR 20230015851; 19.01.2024 KR 20240009052
(71) Applicant: LG Energy Solution, Ltd., Seoul 07335 (KR)
(72) Inventor: KIM, Gi Woung, Daejeon 34122 (KR); SONG, Dae Woong, Daejeon 34122 (KR); YU, Hyung Kyun, Daejeon 34122 (KR); HWANG, Soo Ji, Daejeon 34122 (KR); KANG, Min Hyeong, Daejeon 34122 (KR); SHIN, Ji Hyun, Daejeon 34122 (KR)
(74) Representative: Plasseraud IP
(86) International application number: PCT/KR2024/001359
(87) International publication number: WO 2024/167201

(57) **Abstract**

A pouch film laminate according to the present invention includes a base material layer, a gas barrier layer, and a sealant layer which are sequentially laminated, wherein the base material layer includes a first base material layer, a first adhesive layer, and a second base material layer which are sequentially laminated, and the first adhesive layer includes metal oxide particles in an amount of greater than 15 wt% to less than 60 wt% based on a total weight of the first adhesive layer.

## Description

### TECHNICAL FIELD

### Cross-reference to Related Applications

This application claims priority from Korean Patent Application Nos. 10-2023-0015851, filed on February 6, 2023, and 10-2024-0009052, filed on January 19, 2024, the disclosures of which are incorporated by reference herein.

### Technical Field

The present invention relates to a pouch film laminate and a pouch type secondary battery which is prepared by forming the pouch film laminate.

### BACKGROUND ART

Secondary batteries have been used in various fields, including not only small products such as digital cameras, P-DVDs, MP3Ps, mobile phones, PDAs, portable game devices, power tools, and E-bikes, but also large products requiring high output, such as electric vehicles and hybrid vehicles, and a power storage device and a power storage device for backup which store surplus generated power or renewable energy. Types of the secondary batteries include a nickel cadmium battery, a nickel hydride battery, a lithium ion battery, and a lithium ion polymer battery.

The secondary battery may be prepared by accommodating an electrode assembly, in which a positive electrode, a negative electrode, and a separator disposed therebetween are alternatingly stacked, in a battery case, injecting an electrolyte, and then sealing the battery case. The secondary battery is classified into a pouch type, a can type, and the like, according to a material of a case for accommodating the electrode assembly.

After a cup portion is formed by press working of a flexible pouch film laminate, a pouch type secondary battery may be prepared by accommodating the electrode assembly in an accommodation space inside the cup portion and sealing a sealing portion. The pouch film laminate is composed of a plurality of layers in which a polymer film, such as polyethylene terephthalate, is laminated on one surface of a metal gas barrier layer and a sealant layer using a thermoplastic polyolefin-based resin is laminated on the other surface thereof. When the pouch type battery case is sealed, the sealant layers may be thermally bonded to each other to form the sealing portion.

Recently, demand for a pouch with excellent formability is increasing as capacity of the pouch type secondary battery is increased. In a case in which the gas barrier layer is formed thick to prepare a pouch with good formability, there is a problem in that the sealant layer does not easily melt when sealing the pouch type battery case. Conventionally, a method of increasing sealing temperature and/or sealing time was used as a method of applying more heat during the sealing of the pouch type battery case in order to solve this problem. However, in a case in which the sealing temperature was increased above 220°C, there was a problem in that deformation occurred due to melting of a base material layer, and, in a case in which the sealing time was increased, there was a problem in that productivity was decreased due to an increase in tact time.

### DISCLOSURE OF THE INVENTION

### TECHNICAL PROBLEM

An aspect of the present invention provides a pouch film laminate capable of securing both sealing quality and processability by reducing sealing time while preventing deformation of a sealing portion during a process of sealing a pouch type battery case which has been prepared from the pouch film laminate, and a pouch type battery case and a pouch type secondary battery which are prepared by forming the pouch film laminate.

### TECHNICAL SOLUTION

According to an embodiment of the present invention, there is provided a pouch film laminate including: a base material layer, a gas barrier layer, and a sealant layer which are sequentially laminated, wherein the base material layer includes a first base material layer, a first adhesive layer, and a second base material layer which are sequentially laminated, and the first adhesive layer includes metal oxide particles in an amount of greater than 15 wt% to less than 60 wt% based on a total weight of the first adhesive layer.

The metal oxide particles may include at least one selected from the group consisting of CaO, MnO, SrO, MgO, and ZnO. The metal oxide particles may have an average particle diameter D₅₀ of 0.2 µm to 1 µm.

The first adhesive layer may include the metal oxide particles in an amount of 16 wt% to 59 wt% based on the total weight of the first adhesive layer.

The first base material layer may have a thickness of 10 µm to 50 µm. The first base material layer may include a polyester-based film.

The first adhesive layer may have a thickness of 1 µm to 10 µm. The first adhesive layer may include at least one selected from the group consisting of a urethane-based polymer, an epoxy-based polymer, and an acrylic-based polymer.

The second base material layer may have a thickness of 10 µm to 50 µm. The second base material layer may include a polyamide-based film.

The base material layer may further include a second adhesive layer disposed between the second base material layer and the gas barrier layer.

The gas barrier layer may have a thickness of 30 µm to 100 µm.

The sealant layer may have a thickness of 30 µm to 130 µm.

According to another embodiment of the present invention, there is provided a pouch type battery case which is prepared by forming the above-described pouch film laminate.

According to another embodiment of the present invention, there is provided a pouch type secondary battery including: a pouch type battery case prepared by forming the above-described pouch film laminate, and an electrode assembly accommodated in the pouch type battery case.

### ADVANTAGEOUS EFFECTS

With respect to a conventional pouch film laminate, although a first base material layer prevents moisture penetration from the outside of a pouch, moisture outside the pouch may reach a second base material layer by passing through the first base material layer due to limitations in thickness and material. In this case, the moisture may be easily absorbed into the second base material layer by forming a hydrogen bond with a functional group (ex: amide structure) in a polymer included in the second base material layer. As a result, with respect to a pouch type battery case prepared by forming the conventional pouch film laminate, if it was sealed at a high temperature to supply sufficient heat within a specified tact time, the moisture absorbed in the second base material layer in the pouch film laminate evaporated to generate bubbles in the second base material layer, and, as a result, since a sealing portion was deformed and damaged, there was a problem in that insulation properties of the pouch were deteriorated.

If the pouch type battery case prepared from the conventional pouch film laminate was sealed at a low temperature to solve this problem, there was a problem in that sealing time was increased to reduce production process efficiency. Also, in order to decrease a moisture content per unit weight of the pouch film laminate to less than 1,000 ppm to solve the above problem, there was a problem in that storage management after preparation of the pouch film laminate was difficult or cost was high.

In order to solve the above-described problem, in the present invention, since metal oxide particles are included in an amount of greater than 15 wt% to less than 60 wt% in a first adhesive layer disposed between a first base material layer and a second base material layer, moisture may be removed by hydroxylation of metal oxide in the first adhesive layer before the moisture introduced from the outside of a pouch is absorbed into the second base material layer. Thus, since generation of bubbles due to vaporization of moisture in the second base material layer may be suppressed even if a pouch type battery case prepared from a pouch film laminate of the present invention is sealed at a temperature of 220°C or higher, sealing time may be shortened while preventing deformation of a sealing portion. As a result, sealing quality and processability of the pouch type battery case prepared from the pouch film laminate of the present invention may be secured and durability and life characteristics of a pouch type secondary battery may be improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a cross-sectional view of a pouch film laminate according to the present invention.
FIG. 2 is an exploded assembly view of a pouch type secondary battery according to the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

In this specification, D₅₀ means a particle diameter at a cumulative volume of 50% in a particle size distribution curve. For example, the D₅₀ may be measured by using a laser diffraction method. The laser diffraction method may generally measure a particle diameter ranging from a submicron level to a few mm and may obtain highly repeatable and highresolution results.

### Pouch Film Laminate

A pouch film laminate according to the present invention includes a base material layer, a gas barrier layer, and a sealant layer which are sequentially laminated, wherein the base material layer includes a first base material layer, a first adhesive layer, and a second base material layer which are sequentially laminated, and the first adhesive layer includes metal oxide particles in an amount of greater than 15 wt% to less than 60 wt% based on a total weight of the first adhesive layer.

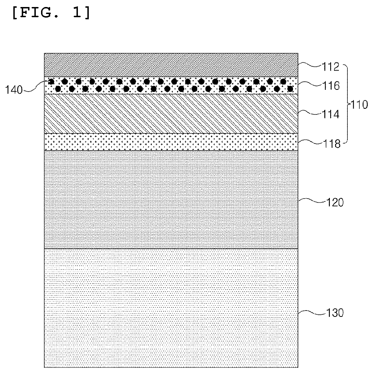

FIG. 1 is a cross-sectional view of a pouch film laminate 100 according to the present invention. Hereinafter, each configuration of the pouch film laminate 100 of the present invention will be described in more detail with reference to FIG. 1.

### (1) Base Material Layer

A base material layer 110 is formed as an outermost layer of the pouch film laminate 100 to protect a secondary battery from friction and collision with the outside. The base material layer 110 is formed of a polymer such that it may electrically insulate an electrode assembly from the outside.

The base material layer 110 may have a thickness of 5 µm to 100 µm, particularly 7 µm to 70 µm, and more particularly 25 µm to 60 µm. In a case in which the thickness of the base material layer 110 satisfies the above range, since external insulation is excellent and an entire pouch is not thick, energy density to volume of the secondary battery may be excellent.

The base material layer 110 according to the present invention has a composite layer structure which is formed by layering two or more materials, respectively. An adhesive layer may be disposed between the respective layers in the composite layer structure. Specifically, the base material layer 110 according to the present invention includes a first base material layer 112, a first adhesive layer 116, and a second base material layer 114. Additionally, the base material layer 110 may further include a second adhesive layer 118 which is disposed between the second base material layer 114 and a gas barrier layer 120.

The first base material layer 112 may be a layer disposed as the outermost layer of the pouch film laminate, and the second base material layer 114 may be a layer disposed between the first base material layer 112 and the gas barrier layer 120. The first adhesive layer 116 may be a layer disposed between the first base material layer 112 and the second base material layer 114. The second adhesive layer 118 may be a layer disposed between the second base material layer 114 and the gas barrier layer 120. The first base material layer 112, the second base material layer 114, the first adhesive layer 116, and the second adhesive layer 118 may be formed of materials with different materials and/or physical properties, respectively. An interface may exist between the respective layers of the base material layer 110 including the first base material layer 112, the second base material layer 114, the first adhesive layer 116, and the second adhesive layer 118. This means that the respective layers are different layers from each other and may be formed separately.

Hereinafter, each of the above-described first base material layer 112, second base material layer 114, first adhesive layer 116, and second adhesive layer 118 will be described in more detail.

### 1) First Base Material Layer

The first base material layer 112 may be a layer disposed as the outermost layer of the pouch film laminate as described above. In this case, the first base material layer 112 may play a role in preventing moisture penetration from the outside of the pouch.

The first base material layer 112 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the first base material layer 112 may include a polyester-based film having wear resistance and heat resistance. For example, the first base material layer 112 may include at least one selected from the group consisting of polyethylene terephthalate, polybutylene terephthalate, and polyethylene naphthalate, but is not limited thereto.

The first base material layer 112 may have a thickness of 10 µm to 50 µm, particularly 10 µm to 40 µm, and more particularly 12 µm to 25 µm. In a case in which the thickness of the first base material layer 112 satisfies the above numerical range, moisture penetration into the inside of the pouch film laminate may be effectively suppressed while insulation properties and formability of the pouch are ensured. Also, since the entire pouch is not thick, the energy density to volume of the secondary battery is excellent.

### 2) Second Base Material Layer

The second base material layer 114 may be a layer disposed between the first base material layer 112 and the gas barrier layer 120. In this case, the second base material layer 114 may play a role in improving the formability of the pouch.

The second base material layer 114 may include a polyamide-based film. For example, the second base material layer 114 may include at least one selected from the group consisting of Nylon 6, Nylon 6,6, Nylon MXD6(polyxylylene adipamide), Nylon 4, Nylon 4,6, and Nylon 4,10, but is not limited thereto. Preferably, the second base material layer 114 may include Nylon 6, and, in this case, there is an advantage in that the formability of the pouch may be improved due to excellent elongation properties of the Nylon 6.

The second base material layer 114 may have a thickness of 10 µm to 50 µm, particularly 10 µm to 40 µm, and more particularly 15 µm to 35 µm. In a case in which the thickness of the second base material layer 114 satisfies the above numerical range, a decrease in the energy density to volume of the secondary battery due to an excessive increase in thickness of the pouch film laminate may be prevented while the formability of the pouch is ensured.

The second base material layer 114 may include an additive. Physical properties of the second base material layer 114 may be changed by including the additive in the second base material layer 114. For example, as an additive to adjust tensile strength of the second base material layer 114, at least one of carbon fibers, glass fibers, and aramid fibers may be added.

### 3) First Adhesive Layer

The first adhesive layer 116 may be a layer disposed between the first base material layer 112 and the second base material layer 114. In this case, the first adhesive layer 116 may act to adhere the first base material layer 112 and the second base material layer 114 to each other.

The first adhesive layer 116 may include at least one selected from the group consisting of a urethane-based polymer, an epoxy-based polymer, and an acrylic-based polymer, but is not limited thereto. Preferably, the first adhesive layer 116 may include a urethane-based polymer, and, in this case, the first adhesive layer 116 may be easily formed and cut while it may adhere to the first base material layer 112 and the second base material layer 114.

The first adhesive layer 116 may have a thickness of 1 µm to 10 µm, particularly 2 µm to 8 µm, and more particularly 2 µm to 5 µm. In a case in which the thickness of the first adhesive layer 116 satisfies the above numerical range, while sufficient adhesion between the first base material layer 112 and the second base material layer 114 is ensured, the decrease in the energy density to volume of the secondary battery due to the excessive increase in thickness of the pouch film laminate may be prevented.

The first adhesive layer 116 includes metal oxide particles 140. The metal oxide particles 140 may remove moisture by being hydroxylated through a reaction with the moisture before the moisture passed through the first base material layer 112 is introduced into the second base material layer 114.

The metal oxide particles 140 may include at least one selected from the group consisting of CaO, MnO, SrO, MgO, and ZnO. Preferably, the metal oxide particles 140 may include at least one of CaO and MgO which are advantageous for hydroxylation with water.

The metal oxide particles 140 may be included in an amount of greater than 15 wt% to less than 60 wt% based on a total weight of the first adhesive layer 116. Specifically, the metal oxide particles 140 may be included in an amount of greater than 15 wt%, 16 wt% or more, or 20 wt% or more, and less than 60 wt%, 59 wt% or less, or 50 wt% or less based on the total weight of the first adhesive layer 116. For example, the metal oxide particles 140 may be included in an amount of greater than 15 wt% to less than 60 wt%, preferably 16 wt% to 59 wt%, and more preferably 20 wt% to 50 wt% based on the total weight of the first adhesive layer 116. In a case in which the metal oxide particles 140 in the first adhesive layer 116 are included in an amount of 15 wt% or less, since the moisture introduced into the second base material layer 114 is not sufficiently removed, bubbles are generated in the second base material layer by evaporation of the moisture contained in the second base material layer when a pouch type battery case prepared from the pouch film laminate is sealed at a temperature of 220°C or higher, and, as a result, there is a problem in that the insulation properties of the pouch are deteriorated due to deformation and damage of a sealing portion. In a case in which the metal oxide particles 140 in the first adhesive layer 116 are included in an amount of 60 wt% or more, since the amount of the metal oxide particles 140 in the first adhesive layer 116 is excessively increased, the adhesion between the first base material layer 112 and the second base material layer 114 is reduced, and, as a result, there is a problem in that delamination between the first base material layer 112 and the second base material layer 114 occurs or the lamination is not performed properly.

The metal oxide particles 140 may have an average particle diameter D₅₀ of 0.2 µm to 1 µm, particularly 0.2 µm to 0.8 µm, and more particularly 0.3 µm to 0.7 µm. In a case in which the average particle diameter D₅₀ of the metal oxide particles 140 satisfies the above numerical range, preparation of the metal oxide particles 140 may be easy, coating properties of a composition for forming the first adhesive layer 116, in which the metal oxide particles 140 are included, may be ensured, and damage to the first base material layer 112 and the second base material layer 114, which are in direct contact with the first adhesive layer 116, may be prevented.

### 4) Second Adhesive Layer

The second adhesive layer 118 may be a layer disposed between the second base material layer 114 and the gas barrier layer 120. In this case, the second adhesive layer 118 may act to adhere the second base material layer 114 and the gas barrier layer 120 to each other.

The second adhesive layer 118 may include at least one selected from the group consisting of a urethane-based polymer, an epoxy-based polymer, and an acrylic-based polymer, but is not limited thereto. Preferably, the second adhesive layer 118 may include a urethane-based polymer, and, in this case, the second adhesive layer 118 may be easily formed and cut while it may adhere to the second base material layer 114 and the gas barrier layer 120.

The second adhesive layer 118 may have a thickness of 1 µm to 10 µm, particularly 2 µm to 8 µm, and more particularly 2 µm to 5 µm. In a case in which the thickness of the second adhesive layer 118 satisfies the above numerical range, while sufficient adhesion between the second base material layer 114 and the gas barrier layer 120 is ensured, the decrease in the energy density to volume of the secondary battery due to the excessive increase in thickness of the pouch film laminate may be prevented.

### (2) Gas Barrier Layer

The gas barrier layer 120 is laminated between the base material layer 110 and a sealant layer 130 to secure mechanical strength of the pouch, block incoming and outgoing of gas or moisture from the outside of the secondary battery, and prevent leakage of an electrolyte from the inside of the pouch type battery case.

The gas barrier layer 120 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 120 may be formed of an aluminum alloy thin film. In a case in which the gas barrier layer 120 is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 120 may be formed of a stainless steel thin film. Specifically, the gas barrier layer 120 may be prepared by forming and/or processing the stainless steel thin film. Since the gas barrier layer 120 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron (Fe), for example, at least one selected from the group consisting of copper (Cu), chromium (Cr), manganese (Mn), nickel (Ni), magnesium (Mg), silicon (Si), and zinc (Zn) may be included in the stainless steel.

The gas barrier layer 120 may have a thickness of 30 µm to 100 µm, particularly 30 µm to 90 µm, and more particularly 40 µm to 80 µm. In a case in which the thickness of the gas barrier layer 120 satisfies the above range, gas barrier performance and formability when forming a cup portion are excellent.

### (3) Sealant Layer

The sealant layer 130 is for completely sealing the inside of the pouch type battery case by being thermally bonded to each other at a sealing portion when the pouch type battery case accommodating the electrode assembly inside is sealed. For this purpose, the sealant layer 130 may be formed of a material having excellent thermal adhesive strength.

The sealant layer 130 may be formed of a material having insulation properties, corrosion resistance, and sealing properties. Specifically, since the sealant layer 130 is in direct contact with the electrode assembly and/or the electrolyte inside the pouch type battery case, it may be formed of a material having insulation properties and corrosion resistance. Also, since the sealant layer 130 completely seals the inside of the pouch type battery case to block material movement between the inside/the outside, it may be formed of a material having high sealing properties (e.g., excellent thermal adhesive strength). To ensure such insulation properties, corrosion resistance, and sealing properties, the sealant layer 130 may be formed of a polymer material.

The sealant layer 130 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably be formed of a polyolefin-based resin such as polypropylene (PP) and/or polyethylene (PE). In this case, the polypropylene (PP) may be composed of cast polypropylene (CPP), acid modified polypropylene (PPa), a polypropylene-ethylene copolymer, and/or a polypropylene-butylene-ethylene terpolymer.

The sealant layer 130 may have a thickness of 30 µm to 130 µm, particularly 50 µm to 120 µm, and more particularly 70 µm to 100 µm. In a case in which the thickness of the sealant layer satisfies the above range, there is an effect of securing formability of the pouch film laminate while securing sealing strength of the sealing portion.

The sealant layer 130 according to the present invention may have a single-layer structure formed of any one material. Alternatively, the sealant layer 130 may have a composite layer structure which is formed by layering two or more materials, respectively. Specifically, the sealant layer 130 may include a first sealant layer and a second sealant layer. In this case, the first sealant layer may be a layer disposed adjacent to the gas barrier layer, and the second sealant layer may be a layer disposed on the first sealant layer. The first sealant layer and the second sealant layer may be formed of materials with different materials and/or physical properties, respectively. An interface may exist between the first sealant layer and the second sealant layer. This means that the first sealant layer and the second sealant layer are different layers from each other and may be formed separately.

In order to ensure long-term adhesion between the gas barrier layer and the first sealant layer, it is particularly desirable that the first sealant layer is formed of acid modified polypropylene (PPa). Herein, the acid modified polypropylene may be maleic anhydride polypropylene (MAH PP).

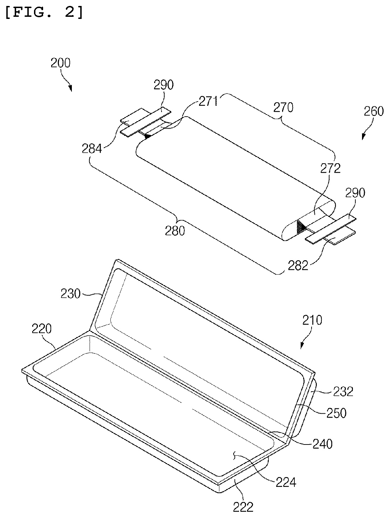

The second sealant layer may be formed of a material having insulation properties, corrosion resistance, and sealing properties. Specifically, since the second sealant layer is in direct contact with an electrode assembly (260 in FIG. 2) and/or the electrolyte inside an accommodation space (224 in FIG. 2), it may be formed of a material having insulation properties and corrosion resistance. Also, since the second sealant layer completely seals the inside of the battery case to block material movement between the inside/the outside, it may be formed of a material having high sealing properties. To ensure such insulation properties, corrosion resistance, and sealing properties, the second sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the second sealant layer may be formed of a polyolefin-based resin such as polypropylene (PP) and/or polyethylene (PE). In this case, the polypropylene may be composed of cast polypropylene, acid modified polypropylene, a polypropylene-ethylene copolymer, and/or a polypropylene-butylene-ethylene terpolymer. Herein, the acid modified polypropylene may be maleic anhydride polypropylene (MAH PP). More preferably, the second sealant layer may include cast polypropylene (CPP) having high tensile strength as well as heat sealability.

### Pouch Type Secondary Battery

Next, a pouch type secondary battery according to the present invention will be described.

The pouch type secondary battery according to the present invention includes a pouch type battery case prepared by forming the above-described pouch film laminate, and an electrode assembly accommodated in the pouch type battery case. Specifically, the pouch type secondary battery according to the present invention includes a pouch type battery case in which an electrode assembly is accommodated, the pouch type battery case is prepared by forming a pouch film laminate, and the pouch film laminate includes a base material layer, a gas barrier layer, and a sealant layer which are sequentially laminated, wherein the base material layer includes a first base material layer, a first adhesive layer, and a second base material layer which are sequentially laminated, and the first adhesive layer includes metal oxide particles in an amount of greater than 15 wt% to less than 60 wt% based on a total weight of the first adhesive layer.

Hereinafter, each configuration of the pouch type secondary battery of the present invention will be described in more detail with reference to FIG. 2.

FIG. 2 is an exploded assembly view of a pouch type secondary battery 200 according to the present invention. As illustrated in FIG. 2, the pouch type secondary battery 200 of the present invention may include a pouch type battery case 210, an electrode assembly 260, an electrode lead 280, an insulating portion 290, and an electrolyte (not shown).

### (1) Pouch Type Battery Case

The pouch type battery case 210 may be prepared by forming the above-described pouch film laminate of the present invention. The pouch type battery case 210 may accommodate the electrode assembly 260 inside. Since detailed configuration and physical properties of the pouch film laminate are the same as described above, a detailed description is omitted.

The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 2. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one sides thereof to each other as illustrated in FIG. 2, but the present invention is not limited thereto and the first case 220 and the second case 230 may be prepared in various ways, for example, the first case 220 and the second case 230 are separated from each other and prepared separately.

According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 2, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.

The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and the insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### (2) Electrode Assembly

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tabs 270 may protrude in different directions of the electrode assembly 260, respectively, but are not limited thereto and may be formed to protrude in various directions, for example, the electrode tabs 270 protrude side by side from one side of the electrode assembly 260 in the same direction.

### (3) Electrode Lead

The electrode lead 280 may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 271 and extends in a protruding direction of the negative electrode tab 271. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 271 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210. The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1: Preparation of Pouch Film Laminate

A first adhesive layer having a size of 266 mm in width, 50 m in length, and 3 µm in thickness and including CaO particles (average particle diameter D₅₀: 0.5 µm) in an amount of 20 wt% based on a total weight of the first adhesive layer (urethane-based film) was prepared.

A second adhesive layer (urethane-based film) having a width of 266 mm, a length of 50 m, and a thickness of 3 µm, a nylon film (second base material layer) having a width of 266 mm, a length of 50 m, and a thickness of 25 µm, the first adhesive layer, and a polyethylene terephthalate (PET) film (first base material layer) having a width of 266 mm, a length of 50 m, and a thickness of 12 µm were sequentially laminated on one surface of an aluminum alloy thin film having a width of 266 mm, a length of 50 m, and a thickness of 60 µm. A polypropylene (PP) film having a width of 266 mm, a length of 50 m, and a thickness of 80 µm was co-extruded on the other surface of the aluminum alloy thin film. As a result, a pouch film laminate having a structure, in which the polypropylene film/the aluminum alloy thin film/the second adhesive layer/the nylon film/the first adhesive layer/the polyethylene terephthalate film were sequentially laminated, was prepared.

Herein, the polypropylene film was a sealant layer, the aluminum alloy thin film was a gas barrier layer, and the second adhesive layer, the nylon film, the first adhesive layer, and the polyethylene terephthalate film were a base material layer.

### Example 2: Preparation of Pouch Film Laminate

A pouch film laminate was prepared in the same manner as in Example 1 except that CaO particles were included in a first adhesive layer in an amount of 30 wt% based on a total weight of the first adhesive layer.

### Example 3: Preparation of Pouch Film Laminate

A pouch film laminate was prepared in the same manner as in Example 1 except that CaO particles were included in a first adhesive layer in an amount of 40 wt% based on a total weight of the first adhesive layer.

### Example 4: Preparation of Pouch Film Laminate

A pouch film laminate was prepared in the same manner as in Example 1 except that CaO particles were included in a first adhesive layer in an amount of 50 wt% based on a total weight of the first adhesive layer.

### Comparative Example 1: Preparation of Pouch Film Laminate

A pouch film laminate was prepared in the same manner as in Example 1 except that CaO particles were not included in a first adhesive layer.

### Comparative Example 2: Preparation of Pouch Film Laminate

A pouch film laminate was prepared in the same manner as in Example 1 except that CaO particles were included in a first adhesive layer in an amount of 5 wt% based on a total weight of the first adhesive layer.

### Comparative Example 3: Preparation of Pouch Film Laminate

A pouch film laminate was prepared in the same manner as in Example 1 except that CaO particles were included in a first adhesive layer in an amount of 10 wt% based on a total weight of the first adhesive layer.

### Comparative Example 4: Preparation of Pouch Film Laminate

A pouch film laminate was prepared in the same manner as in Example 1 except that CaO particles were included in a first adhesive layer in an amount of 15 wt% based on a total weight of the first adhesive layer.

### Comparative Example 5: Preparation of Pouch Film Laminate

A pouch film laminate was prepared in the same manner as in Example 1 except that CaO particles were included in a first adhesive layer in an amount of 60 wt% based on a total weight of the first adhesive layer.

### Comparative Example 6: Preparation of Pouch Film Laminate

A second adhesive layer having a size of 266 mm in width, 50 m in length, and 3 µm in thickness and including CaO particles (average particle diameter D₅₀: 0.5 µm) in an amount of 30 wt% based on a total weight of the second adhesive layer (urethane-based film) was prepared.

The second adhesive layer, a nylon film (second base material layer) having a width of 266 mm, a length of 50 m, and a thickness of 25 µm, a first adhesive layer (urethane-based film) having a width of 266 mm, a length of 50 m, and a thickness of 3 µm, and a polyethylene terephthalate (PET) film (first base material layer) having a width of 266 mm, a length of 50 m, and a thickness of 12 µm were sequentially laminated on one surface of an aluminum alloy thin film having a width of 266 mm, a length of 50 m, and a thickness of 60 µm. A polypropylene (PP) film having a width of 266 mm, a length of 50 m, and a thickness of 80 µm was co-extruded on the other surface of the aluminum alloy thin film. As a result, a pouch film laminate having a structure, in which the polypropylene film/the aluminum alloy thin film/the second adhesive layer/the nylon film/the first adhesive layer/the polyethylene terephthalate film were sequentially laminated, was prepared.

Herein, the polypropylene film was a sealant layer, the aluminum alloy thin film was a gas barrier layer, and the second adhesive layer, the nylon film, the first adhesive layer, and the polyethylene terephthalate film were a base material layer.

### Comparative Example 7: Preparation of Pouch Film Laminate

A third adhesive layer having a size of 266 mm in width, 50 m in length, and 3 µm in thickness and including CaO particles (average particle diameter D₅₀: 0.5 µm) in an amount of 30 wt% based on a total weight of the third adhesive layer (urethane-based film) was prepared.

A second adhesive layer (urethane-based film) having a width of 266 mm, a length of 50 m, and a thickness of 3 µm, a nylon film having a width of 266 mm, a length of 50 m, and a thickness of 25 µm, a first adhesive layer (urethane-based film) having a width of 266 mm, a length of 50 m, and a thickness of 3 µm, and a polyethylene terephthalate (PET) film having a width of 266 mm, a length of 50 m, and a thickness of 12 µm were sequentially laminated on one surface of an aluminum alloy thin film having a width of 266 mm, a length of 50 m, and a thickness of 60 µm. The third adhesive layer was laminated on the other surface of the aluminum alloy thin film and a polypropylene (PP) film having a width of 266 mm, a length of 50 m, and a thickness of 80 µm was co-extruded. As a result, a pouch film laminate having a structure, in which the polypropylene film/the third adhesive layer/the aluminum alloy thin film/the second adhesive layer/the nylon film/the first adhesive layer/the polyethylene terephthalate film were sequentially laminated, was prepared.

Herein, the polypropylene film was a sealant layer, the aluminum alloy thin film was a gas barrier layer, and the second adhesive layer, the nylon film, the first adhesive layer, and the polyethylene terephthalate film were a base material layer.

### Experimental Example 1: Measurement of Moisture Content per Unit Weight of the Pouch Film Laminate, and Evaluation of Degree of Adhesion Between the First Base Material Layer and the Second Base Material Layer

After the pouch film laminates respectively prepared in Examples 1 to 4 and Comparative Examples 1 to 7 were stored at a temperature of 60°C and a relative humidity of 90% for 2 hours, a moisture content per unit weight of the pouch film laminate was measured. Specifically, after the pouch film laminate, which was cut to a size of 50 mm × 40 mm, was stored at a temperature of 60°C and a relative humidity of 90% for 2 hours, a weight (µg/g = ppm) of moisture contained in the pouch film laminate per unit weight of the pouch film laminate was measured at 150°C using a Karl Fischer moisture meter. Measurement results are presented in Table 1 below.

Also, a degree of adhesion between the first base material layer and the second base material layer was evaluated by visually checking whether delamination between the first base material layer and the second base material layer in the pouch film laminate, which had been stored at a temperature of 60°C and a relative humidity of 90% for 2 hours, occurred or not. The results thereof are presented in Table 1 below.
o: occurrence of interlayer delamination between the first base material layer and the second base material layer
×: non-occurrence of the interlayer delamination between the first base material layer and the second base material layer

### Experimental Example 2: Evaluation of Deformation of Sealing Portion in the Pouch Type Battery Case

Two of each of the pouch film laminates, which had been respectively prepared in Examples 1 to 4 and Comparative Examples 1 to 7, were prepared. Thereafter, after each pouch film laminate was cut to a size of 266 mm in width and 200 mm in length and then folded in half to a size of 133 mm × 200 mm such that the sealant layers were in contact with each other, pouch type battery cases were prepared by sealing an end of a long side (200 mm) under the following three conditions, respectively.
- sealing for 1.8 seconds at a seal bar area of 200 mm × 8 mm, 210°C, and a cylinder pressure of 0.1 MPa
- sealing for 1.8 seconds at a seal bar area of 200 mm × 8 mm, 230°C, and a cylinder pressure of 0.075 MPa

Next, for each of the pouch type battery cases sealed at different temperatures, whether or not a sealing portion was deformed due to bubbles generated in the second base material layer, which was located in the sealing portion, was visually checked. The results thereof are presented in Table 1 below.
∘: the sealing portion was deformed due to the generation of bubbles
×: no bubbles were generated and the sealing portion was not deformed

**[Table 1]**

| | Pouch film laminate | | | | Whether or not the sealing portion was deformed due to the generation of bubbles in the pouch type battery case | |
|---|---|---|---|---|---|---|
| | Location where CaO was included | CaO conten t in the adhesi ve layer includ ing CaO (wt%) | Storage at a temperature of 60°C and relative humidity of 90% for 2 hours | | Sealin g temper ature of 210°C | Sealin g temper ature of 230°C |
| | | | Moistu re conten t per unit weight (ppm) | Occurrence of delaminati on between the first base material layer and the second base material layer | | |
| Example 1 | First adhesive layer | 20 | 200 | × | × | × |
| Example 2 | First adhesive layer | 30 | 200 | × | × | × |
| Example 3 | First adhesive layer | 40 | 200 | × | × | × |
| Example 4 | First adhesive layer | 50 | 200 | × | × | × |
| Comparative Example 1 | First adhesive layer | 0 | 5500 | × | × | ○ |
| Comparative Example 2 | First adhesive layer | 5 | 3000 | × | × | ○ |
| Comparative Example 3 | First adhesive layer | 10 | 2000 | × | × | ○ |
| Comparative Example 4 | First adhesive layer | 15 | 1000 | × | × | ○ |
| Comparative Example 5 | First adhesive layer | 60 | 200 | ○ | × | × |
| Comparative Example 6 | Second adhesive layer | 30 | 4000 | × | × | ○ |
| Comparative Example 7 | Third adhesive layer | 30 | 5000 | × | × | ○ |

According to Table 1, with respect to Examples 1 to 4 in which the metal oxide particles were included in an amount of greater than 15 wt% to less than 60 wt% in the first adhesive layer, since no bubbles were generated in the second base material layer even if sealing was performed at a temperature of 230°C, it may be confirmed that the sealing portion of the pouch type battery case was not deformed and lamination between the first base material layer and the second base material layer was excellent.

In contrast, with respect to Comparative Examples 1 to 4 in which the metal oxide particles were included in an amount of 15 wt% or less in the first adhesive layer, since a relatively large amount of moisture was present in the second base material layer, bubbles were generated in the second base material layer when sealing was performed at a temperature of 230°C, and thus, it may be confirmed that the sealing portion of the pouch type battery case was deformed.

Also, with respect to Comparative Example 5 in which the metal oxide particles were included in an amount of 60 wt% or more in the first adhesive layer, since adhesion between the first base material layer and the second base material layer in the pouch film laminate was reduced, it may be confirmed that delamination between the first base material layer and the second base material layer occurred and lamination was not well done.

Furthermore, with respect to Comparative Examples 6 and 7 in which the metal oxide particles were included in an amount of greater than 15 wt% to less than 60 wt% in the second adhesive layer laminated between the second base material layer and the gas barrier layer; or the third adhesive layer laminated between the gas barrier layer and the sealant layer, rather than the first adhesive layer laminated between the first base material layer and the second base material layer, since a relatively large amount of moisture was present in the second base material layer, bubbles were generated in the second base material layer when sealing was performed at a temperature of 230°C, and thus, it may be confirmed that the sealing portion of the pouch type battery case was deformed.

### (Description of the Symbols)

100: Pouch Film Laminate
110: Base Material Layer
112: First Base Material Layer
114: Second Base Material Layer
116: First Adhesive Layer
118: Second Adhesive Layer
120: Gas Barrier Layer
130: Sealant Layer
140: Metal Oxide Particles
200: Pouch Type Secondary Battery
210: Pouch Type Case
220: First Case
222: Cup Portion
224: Accommodation Portion
230: Second Case
232: Cup Portion
240: Bridge Portion
250: Sealing Portion
260: Electrode Assembly
270: Electrode Tab
271: Negative Electrode Tab
272: Positive Electrode Tab
280: Electrode Lead
282: Positive Electrode Lead
284: Negative Electrode Lead
290: Insulating Portion

## Claims

1. A pouch film laminate comprising:
a base material layer, a gas barrier layer, and a sealant layer which are sequentially laminated,
wherein the base material layer comprises a first base material layer, a first adhesive layer, and a second base material layer which are sequentially laminated, and
the first adhesive layer comprises metal oxide particles in an amount of greater than 15 wt% to less than 60 wt% based on a total weight of the first adhesive layer.

2. The pouch film laminate of claim 1, wherein the metal oxide particles comprise at least one selected from the group consisting of CaO, MnO, SrO, MgO, and ZnO.

3. The pouch film laminate of claim 1, wherein the metal oxide particles have an average particle diameter D₅₀ of 0.2 µm to 1 µm.

4. The pouch film laminate of claim 1, wherein the first adhesive layer comprises the metal oxide particles in an amount of 16 wt% to 59 wt% based on the total weight of the first adhesive layer.

5. The pouch film laminate of claim 1, wherein the first base material layer has a thickness of 10 µm to 50 µm.

6. The pouch film laminate of claim 1, wherein the first base material layer comprises a polyester-based film.

7. The pouch film laminate of claim 1, wherein the first adhesive layer has a thickness of 1 µm to 10 µm.

8. The pouch film laminate of claim 1, wherein the first adhesive layer comprises at least one selected from the group consisting of a urethane-based polymer, an epoxy-based polymer, and an acrylic-based polymer.

9. The pouch film laminate of claim 1, wherein the second base material layer has a thickness of 10 µm to 50 µm.

10. The pouch film laminate of claim 1, wherein the second base material layer comprises a polyamide-based film.

11. The pouch film laminate of claim 1, wherein the base material layer further comprises a second adhesive layer disposed between the second base material layer and the gas barrier layer.

12. The pouch film laminate of claim 1, wherein the gas barrier layer has a thickness of 30 µm to 100 µm.

13. The pouch film laminate of claim 1, wherein the sealant layer has a thickness of 30 µm to 130 µm.

14. A pouch type battery case which is prepared by forming the pouch film laminate of any one of claims 1 to 13.

15. A pouch type secondary battery comprising:
a pouch type battery case prepared by forming the pouch film laminate of any one of claims 1 to 13; and
an electrode assembly accommodated in the pouch type battery case.
